# EUROPÄISCHE PATENTSCHRIFT

(11) **EP 3 906 774 B1**
(45) Veröffentlichungstag und Bekanntmachung des Hinweises auf die Patenterteilung: **08.04.2026**
(21) Anmeldenummer: 21156507.2
(22) Anmeldetag: 11.02.2021
(51) Int. Cl.: A01F 12/44

(54) **MÄHDRESCHER**
COMBINE HARVESTER
MOISSONNEUSE-BATTEUSE

(30) Priorität: 06.05.2020 DE 102020112190
(43) Veröffentlichungstag der Anmeldung: 10.11.2021
(73) Patentinhaber: CLAAS Selbstfahrende Erntemaschinen GmbH, 33428 Harsewinkel (DE)
(72) Erfinder: Baumgarten, Joachim, 48361 Beelen (DE); Schürmann, Ludger, 48488 Emsbüren (DE); Hay, Jonas, 33428 Harsewinkel (DE); Lehmberg, Andreas, 33428 Harsewinkel (DE)
(74) Vertreter: CLAAS Gruppe

(56) Entgegenhaltungen:
- EP-A1- 0 302 210
- EP-A1- 3 207 788
- EP-A1- 3 494 775
- EP-A1- 3 613 276
- EP-A2- 2 333 348
- DE-A1- 102005 026 608
- DE-A1- 102011 000 130

## Beschreibung

Die vorliegende Erfindung betrifft einen Mähdrescher gemäß dem Oberbegriff des Anspruches 1.

Ein Mähdrescher mit einer Dreschvorrichtung und einer Abscheidevorrichtung, denen jeweils eine Fördervorrichtung zugeordnet ist, wobei die Fördervorrichtungen dazu eingerichtet sind, einer Reinigungsvorrichtung einen zu reinigenden, von der Dreschvorrichtung und der Abscheidevorrichtung abgeschiedenen Erntegutstrom zuzuführen, ist aus der DE 10 2005 026 608 A1 bekannt. Die aus der DE 10 2005 026 608 A1 bekannte Reinigungsvorrichtung zum Reinigen des aus Korn und Spreu bestehenden Erntegutstromes umfasst ein Obersieb und Untersieb sowie ein Reinigungsgebläse. Von der Dreschvorrichtung sowie der Abscheidevorrichtung abgeschiedenes, zu reinigendes Erntegut gelangt über schwingend angetriebene Förderböden auf ein außerhalb der Reinigungsvorrichtung positioniertes Vorreinigungssieb. Von dem Vorreinigungssieb gelangt ein Teil des Erntegutstroms durch die Sieböffnungen des Vorreinigungssiebes auf einen unterhalb des Vorreinigungssiebes angeordneten schwingend angetriebenen Förderboden, von welchem das Erntegut über einen eine Fallstufe bildenden Rost des Vorreinigungssiebes auf das Untersieb der Reinigungsvorrichtung gelangt. Der andere Teil des Erntegutstroms gelangt von dem Vorreinigungssieb über eine Fallstufe auf das Obersieb und von dort anteilig auf das Untersieb. Die Ausgestaltung des aus der DE 10 2005 026 608 A1 bekannten Mähdreschers zur Förderung und Reinigung des Erntegutstroms ist kompliziert und benötigt wegen der aufgelösten Bauform einen großen Bauraum, was zu Lasten anderer Baugruppen geht. Zudem neigt die aufgelöste Struktur zu Gutführungs- und Förderproblemen, da die verschiedenen Gutströme häufig umgelenkt und zusammengeführt werden müssen.

Ausgehend von dem vorgenannten Stand der Technik, liegt der Erfindung die Aufgabe zugrunde, einen Mähdrescher der eingangs genannten Art weiterzubilden, der sich durch eine höhere Effizienz insbesondere seiner Reinigungsvorrichtung auszeichnet.

Diese Aufgabe wird erfindungsgemäß durch einen Mähdrescher gemäß dem Oberbegriff des Anspruches 1 in Verbindung mit den kennzeichnenden Merkmalen gelöst. Vorteilhafte Weiterbildungen sind Gegenstand der Unteransprüche.

Gemäß dem Anspruch 1 wird ein Mähdrescher mit einer Dreschvorrichtung und einer Abscheidevorrichtung, denen jeweils eine Fördervorrichtung zugeordnet ist, vorgeschlagen, wobei die Fördervorrichtungen dazu eingerichtet sind, einer Reinigungsvorrichtung einen von der Dreschvorrichtung und der Abscheidevorrichtung abgeschiedenen zu reinigenden Erntegutstrom zuzuführen. Der Mähdrescher ist dadurch gekennzeichnet,
- dass die Reinigungsvorrichtung ein Reinigungsgebläse sowie ein erstes Obersiebsegment und ein in Förderrichtung nachgeordnetes zweites Obersiebsegment umfasst,
- dass unterhalb des ersten Obersiebsegmentes ein Zwischenförderboden und unterhalb des zweites Obersiebsegmentes ein Untersieb angeordnet ist,
- dass das Reinigungsgebläse einen oberen Luftaustrittsbereich und einen unteren Luftaustrittsbereich aufweist, wobei ein aus dem oberen Luftaustrittsbereich ausströmender Luftstrom zumindest das erste Obersiebsegment oben- und untenseitig beaufschlagt und ein aus dem unteren Luftaustrittsbereich ausströmender Luftstrom das zweite Obersiebsegment zumindest untenseitig und das Untersieb oben- und untenseitig beaufschlagt.

Dieser Aufbau der Reinigungsvorrichtung hat den Vorteil, dass eine Steigerung der Durchsatzleistung an zu reinigendem Erntegut ermöglicht wird, wobei ein häufiges Umlenken und Zusammenführen der zu reinigenden Erntegutströme innerhalb der Reinigungsvorrichtung vermieden wird. Die Beaufschlagung der Obersiebsegmente sowie des Untersiebes an Oberseite und/oder Unterseite mit einem Luftstrom ist dabei als Überströmung sowie Durchströmung von Siebflächen bzw. Sieböffnungen zu verstehen. Die Siebflächen bzw. die Sieböffnungen sind in ihrer Größe veränderbar.

Erfindungsgemäß sind für einen oszillierenden Antrieb des ersten Obersiebsegments, des zweiten Obersiebsegments, des Zwischenförderbodens sowie des Untersiebs diesen jeweils Aktoren zugeordnet, die durch eine Steuereinheit unabhängig voneinander ansteuerbar sind. Hierdurch lassen sich die schwingenden Elemente der Reinigungsvorrichtung in ihrer Schwingungsrichtung separat ändern. Ebenfalls individuell einstellbar ist die jeweilige Schwingungsfrequenz der schwingenden Elemente der Reinigungsvorrichtung.

Weiterhin können das erste Obersiebsegment, das zweite Obersiebsegment sowie das Untersieb unterschiedliche Schwingungsrichtungswinkel aufweisen. Durch die voneinander abweichenden Schwingungsrichtungswinkel kann den unterschiedlichen quantitativen Belastungen von erstem Obersiebsegment und zweitem Obersiebsegment sowie dem Untersieb mit zu reinigendem Erntegut Rechnung getragen werden. Ein größerer Schwingungsrichtungswinkel führt zu einer steileren Bewegung des jeweils zu fördernden Erntegutes, woraus sich einerseits eine stärkere Vertikalbeschleunigung ergibt, die vom Sieb auf das darauf liegende Erntegut ausgeübt wird, und damit eine größere Normalkraft, mit der die Sieboberfläche auf die Gutschicht wirkt. Hieraus resultiert eine größere Reibkraft, welche die Gutschicht stärker aufwärts fördert, als dies bei einer flacheren Ausrichtung des Schwingungsrichtungswinkels der Fall wäre. Dadurch wird die sich aus der steileren Stellung des Siebes ergebende Verzögerung des Gutstroms kompensiert. Gleichzeitig ergibt sich durch die verstärkte vertikale Bewegung des Siebes eine stärkere Auflockerung der Gutschicht, wodurch wiederum der Luftstrom besser in die Gutschicht eindringen und die Nichtkornbestandteile fortblasen kann.

Vorzugsweise kann die der Abscheidevorrichtung zugeordnete Fördervorrichtung als Bandförderer ausgeführt sein. Im Unterschied zu einem konventionellen Förderboden, der, wie der Förderboden unterhalb der Dreschvorrichtung, oszillierend angetrieben ist, hat die Ausführung der Fördervorrichtung als Bandförderer den Vorteil, dass weniger Bauraum benötigt wird, da eine in horizontaler und vertikaler Richtung orientierte Bewegung wie beim konventionellen, oszillierend angetriebenen Förderboden entfällt. Der Bandförderer ist statisch angeordnet und kann besonders flach bauend ausgeführt sein.

Weiterhin kann das Reinigungsgebläse einen um eine Achse drehbaren Rotor und ein Gehäuse umfassen, wobei das Gehäuse wenigstens eine Ansaugöffnung und eine erste Ausströmöffnung aufweist und einen sich um den Rotor herum erstreckenden Gebläsekanal begrenzt, wobei die axiale Ausdehnung des Gebläsekanals entlang des Umfangs in Drehrichtung des Rotors zur ersten Ausströmöffnung hin zunimmt.

Dabei kann ein Rand der Ansaugöffnung eine zur Achse senkrechte Ebene definieren und den Gebläsekanal in einen radial nach innen vom Rotor begrenzten Kernbereich und einen Erweiterungsbereich unterteilen, dessen Querschnitt entlang des Umfangs in Drehrichtung des Rotors zur ersten Ausströmöffnung hin zunimmt.

Insbesondere kann an der ersten Ausströmöffnung eine Umlenkfläche zum Umlenken des aus der Ausströmöffnung austretenden Luftstroms entgegen der Drehrichtung des Rotors angeordnet sein.

Besonders bevorzugt können mehrere Rotoren und Gehäuse entlang der Achse angeordnet sein. Bei einem Gebläse zur Verwendung in einem Mähdrescher sind typischerweise mehrere Rotoren und Gehäuse entlang der Achse angeordnet, um einen sich über einen breiten Querschnitt, idealerweise nahezu die gesamte Breite des Karosserieaufbaus des Mähdreschers, verteilten Blasluftstrom für die Reinigungsvorrichtung zu erzeugen. Zwischen einander gegenüberliegenden Stirnseiten der Gehäuse sollte jeweils ein Zwischenraum vorhanden sein, durch den eine in einer solchen Stirnseite angeordnete Saugöffnung mit Frischluft versorgt werden kann.

Dabei kann bei mehreren entlang der Achse angeordneten Rotoren sich ein über die Breite der Anordnung erstreckender Abströmkanal an die ersten Ausströmöffnungen anschließen, welcher den austretenden Luftstrom entgegen der Fahrtrichtung des Mähdreschers umlenkt. In dem Abströmkanal können Strömungsleitelemente angeordnet sein, die der Umlenkung und/oder Verteilung des austretenden Luftstromes dienen. Vorzugsweise sind die Strömungsleitelemente distal zur Achse an einer zur Achse parallelen Wandfläche des Abströmkanals angeordnet. Die Strömungsleitelemente können als Blechbauteile ausgeführt sein. Die Strömungsleitelemente erstrecken sich in radialer Richtung zur Achse hin.

Insbesondere kann das Gehäuse eine zweite Ausströmöffnung aufweisen und die axiale Ausdehnung des Gebläsekanals kann in einem sich in Drehrichtung des Rotors von der ersten Ausströmöffnung zur zweiten Ausströmöffnung erstreckenden Umfangsabschnitt des Gebläsekanals konstant sein. Indem vorzugsweise derjenige Umfangsabschnitt des Gebläsekanals in axialer Richtung verbreitert wird, der auf eine Umlenkfläche an der ersten Ausströmöffnung zuläuft, kann der Nachteil eines durch die Umlenkfläche erhöhten Strömungswiderstandes ausgeglichen werden.

Des Weiteren kann sich an die zweite Ausströmöffnung ein Ausströmkanal anschließen, der durch zumindest zwei vertikal verlaufende Seitenwände und je ein zueinander parallel angeordnetes Bodenelement und Deckelelement begrenzt ist, wobei zumindest auf dem Bodenelement einen trapezförmigen Querschnitt aufweisende Leitelemente angeordnet sind, die sich in Richtung Austrittsöffnung des Ausströmkanals erstrecken. Mittels der Leitelemente wird die Umlenkung sowie die Verteilung über die Breite des Ausströmkanals vergleichmäßigt.

Dabei können die Leitelemente einen in Richtung der Austrittsöffnung des Ausströmkanals ansteigenden Höhenverlauf aufweisen. Die einen trapezförmigen Querschnitt aufweisenden Leitelemente tragen dazu bei, bei einer Ausführung des Reinigungsgebläses als Radialgebläse, den sich in der Mitte einer jeweiligen zweiten Ausströmöffnung stärker konzentrierenden Luftstrom über die gesamte Breite hinweg zu vergleichmäßigen. Dadurch kann in den mit einem Luftstrom zu beaufschlagenden ersten und zweiten Siebsegmenten sowie dem Untersieb das Auftreten von Teilbereichen insbesondere unterschiedlich starker Durchströmung vermieden werden.

Gemäß einer bevorzugten Weiterbildung kann unterhalb des Untersiebes und/oder unterhalb zumindest des zweiten Obersiebsegmentes jeweils zumindest ein Luftleitelement angeordnet sein, welches einander gegenüberliegende, von spitz zulaufenden Bereichen freie Stirnflächen und zumindest eine diese miteinander verbindende Seitenfläche aufweist. Hierbei können die Stirnflächen bezogen auf den Querschnittsmittelpunkt des Luftleitelementes unterschiedliche Krümmungsradien aufweisen, wobei die Krümmungsradien der Stirnflächen kleiner sind als der Krümmungsradius der zumindest einen Seitenfläche. Dabei können die Krümmungsradien der Stirnflächen des Luftleitelementes gleich groß sein. Alternativ kann der Krümmungsradius der der Luftströmung zugewandten Stirnfläche größer sein als der Krümmungsradius der der Luftströmung abgewandten Stirnfläche. Aus der besonderen Querschnittsform der Luftleitelemente resultiert der Effekt, dass der von dem Reinigungsgebläse erzeugte Luftstrom das jeweilige Luftleitelement beidseitig umströmt, wobei der Luftstrom durch das jeweilige Luftleitelement untenseitig eine andere Ablenkung erfährt als obenseitig. Vorteilhafterweise kann das jeweilige Luftleitelement einen im Wesentlichen ellipsenförmigen, von spitz zulaufenden Bereichen freien Querschnitt aufweisen. Die Anordnung von Luftleitelementen insbesondere unterhalb des zweiten Siebsegmentes ist im Hinblick auf die Gesamtlänge des zweiten Siebsegmentes, die möglichst groß ein sollte, vorteilhaft, um auch die von der zweiten Ausströmöffnung des Reinigungsgebläses entfernten ausreichend mit dem Luftstrom zu beaufschlagen.

Bevorzugt kann das jeweilige Luftleitelement eine Neigung zur jeweiligen Siebebene des Untersiebes und/oder zumindest des zweiten Obersiebsegmentes aufweisen. Das jeweilige Luftleitelement wird angeströmt, wobei sich aufgrund des Staudrucks ein Staupunkt vor der Stirnfläche des Luftleitelementes ausbildet, der sich oberhalb Mittelebene des Luftleitelementes bildet. Die Luftströmung teilt sich in diesem Staupunkt auf, so dass ein Teil der Luftströmung über das Luftleitelement strömen kann, während der andere Teil der Luftströmung unter dem Luftleitelement entlang strömt. Ein Teil der Luftströmung, welcher das Luftleitelement obenseitig überströmt wird von der Seitenfläche in vertikaler Richtung, d.h. in Richtung der darüber befindlichen Siebebenen abgelenkt, während ein anderer Teil der obenseitigen Luftströmung sich an den konvexen Verlauf der Seitenfläche anlegt und in im Wesentlichen horizontaler Richtung umgelenkt wird. Der das Luftleitelement nach der Aufteilung im Staupunkt untenseitig umströmende Anteil der Luftströmung legt sich an den Profilverlauf des Luftleitelementes an und wird von der Seitenfläche in im Wesentlichen vertikaler Richtung umgelenkt. Daraus ergibt sich eine vertikale Siebdurchströmung hinter dem Luftleitelement. Im rückwärtigen Bereich des Luftleitelementes, d.h. im Bereich der der Luftströmung abgewandten Stirnfläche, vereinen sich der obenseitige, in im Wesentlichen horizontaler Richtung umgelenkte Teilstrom und, zumindest teilweise, der untenseitige Teilstrom. Dadurch wird eine Ablösung hinter der der Luftströmung abgewandten Stirnfläche vollständig oder nahezu vollständig vermieden, so dass kein Windschatten hinter dem Luftleitelement auftritt. Somit können alle Lamellen einer oberhalb des Leitelementes befindlichen Siebebene zumindest des zweiten Obersiebsegmentes als auch des Untersiebes durchströmt werden.

Insbesondere kann die Neigung einer die Stirnflächen in ihren am weitesten zueinander beabstanden Punkten verbindenden gedachten Hauptachse des jeweiligen Luftleitelementes durch zumindest einen Aktor einstellbar sein. Entsprechend der Einstellung der daraus resultierenden Neigung des Luftleitelementes variiert das An- und Umströmungsverhalten. So lässt sich der Anteil der Luftströmung, der auf der dem zweiten Siebsegment und/oder dem Untersieb abgewandten Seite des Luftleitelementes in einen in Gutaustragrichtung weiter hinten liegenden Bereich umgelenkt wird, durch eine Neigungsänderung der Hauptachse variieren. Dabei kann den Luftleitelementen unterhalb des zweiten Siebsegment und/oder den Luftleitelementen unterhalb des Untersiebes jeweils wenigstens ein Aktor zugeordnet sein, der die Neigung der gedachten Hauptachse des jeweiligen Luftleitelementes verändert. Die Änderung kann in Abhängigkeit von Betriebsparametern, beispielsweise Längs- und /oder Querneigung des Mähdreschers und/oder Erntegutparametern, beispielsweise Erntegutart, Feuchtigkeit und dergleichen, erfolgen.

Vorzugsweise kann der jeweilige Abstand der Luftleitelemente zu dem Untersieb und/oder zumindest dem zweiten Obersiebsegment in vertikaler Richtung variierbar sein.

Zusätzlich oder alternativ kann der jeweilige Abstand der Luftleitelemente zu dem Untersieb und/oder zumindest dem zweiten Obersiebsegment in horizontaler Richtung variierbar sein. Auf diese Weise können sich ändernde Betriebsbedingungen der Reinigungseinrichtung Berücksichtigung finden, beispielsweise eine Änderung der Neigung der Reinigungseinrichtung in deren Längsrichtung.

Gemäß einer vorteilhaften Weiterbildung kann zudem vorgesehen sein, dass unterhalb eines Siebkastens der Reinigungsvorrichtung eine Lenkachse mit daran angeordneten Rädern angeordnet ist, wobei sich der Siebkasten abschnittsweise zwischen den Rädern im Wesentlichen über die Breite des Mähdreschers erstreckt, wobei der Siebkasten eine oberhalb der Räder befindliche Siebanordnungsebene und einen zwischen den Rädern befindlichen Bodenbereich aufweist, wobei die Siebanordnungsebene und der Bodenbereich des Siebkastens zwischen zwei zueinander parallelen, sich in Längsrichtung des Mähdreschers erstreckenden, in Hochrichtung des Mähdreschers verlaufenden Rahmenabschnitten angeordnet sind, wobei zur Vergrößerung des Lenkwinkels der Räder die Rahmenabschnitte jeweils in einem Übergangsbereich von der Siebanordnungsebene zu der Bodenebene eine in Querrichtung des Mähdreschers weisende Verjüngung aufweisen. Dadurch ist ein Lenkwinkel, um den die Räder schwenkbar sind, vergrößert. Aufgrund des vergrößerten Lenkwinkels ist der Wendekreis des Mähdreschers kleiner, so dass der Mähdrescher um engere Kurven fahren kann, und das Lenkverhalten des Mähdreschers insgesamt verbessert ist. Die Anordnung der Verjüngungen am Siebkasten ist dabei derart gewählt, dass eine Beeinträchtigung der Funktion des Untersiebes vermeiden wird.

Vorzugsweise sind die Rahmenabschnitte symmetrisch ausgebildet. Besonders bevorzugt sind die Verjüngungen an den Rahmenabschnitten spiegelbildlich zueinander vorgesehen. Dadurch ist der Siebkasten im Wesentlichen flächensymmetrisch zu einer Mittelebene ausgebildet. Bei einem schwingend oszillierenden Antrieb des Siebkastens ist so eine im Wesentlichen gleichmäßige Gewichtsverteilung beiderseitig der Mittelebene möglich. Zudem können dadurch zwei an gegenüberliegenden Enden einer gemeinsamen Achse angeordneten Räder in demselben Lenkwinkel positioniert werden. Die Verjüngung der Rahmenabschnitte ermöglicht die Verwendung einer Bereifung der Räder mit einer größeren Reifenbreite und/oder die Vergrößerung des maximalen Lenkwinkels der Räder. Dadurch können die Verdichtung des Bodens während einer Erntefahrt und/oder das Lenkverhalten des Mähdreschers verbessert werden.

Insbesondere kann der jeweilige Übergangsbereich der Rahmenabschnitte stufenlos ausgebildet sein. Hierdurch kann einer Ablagerung von Bestandteilen des Erntegutes begegnet werden.

Ein Mähdrescher mit einer Reinigungseinrichtung, der sich vorzugsweise durch eine Ausgestaltung zumindest gemäß den Ansprüchen 1, 4, 12 und 17 auszeichnet, ist besonders effizient und ermöglicht eine Steigerung der Durchsatzleistung, wobei der Einfluss auf den zu reinigenden Gutstrom durch Umlenken und Zusammenführen auf das Notwendige beschränkt wird.

Die vorliegende Erfindung wird nachstehend anhand eines in den Zeichnungen dargestellten Ausführungsbeispieles näher erläutert.

Es zeigen:
- Fig. 1: schematisch eine Seitenansicht eines Mähdreschers nach dem Stand der Technik;
- Fig. 2: eine schematische Darstellung einer erfindungsgemäßen Reinigungsvorrichtung;
- Fig. 3: schematisch eine Querschnittansicht eines unterhalb eines Untersiebes der Reinigungsvorrichtung angeordneten Luftleitelements;
- Fig. 4: eine schematische Darstellung eines Antriebsschemas der Reinigungsvorrichtung gemäß Fig. 2;
- Fig. 5: eine perspektivische Ansicht eines Gebläsemoduls eines Reinigungsgebläses;
- Fig. 6: einen axialen Schnitt durch das Gebläsemodul;
- Fig. 7: eine perspektivische Ansicht der Gehäuse mehrerer untereinander verbundener Gebläsemodule;
- Fig. 8: eine perspektivische Ansicht untereinander verbundener Gehäuse des Reinigungsgebläses mit einem Ausströmkanal; und
- Fig. 9: schematisch ein Schnittbild durch den Mähdrescher von der Front des Mähdreschers aus gesehen.

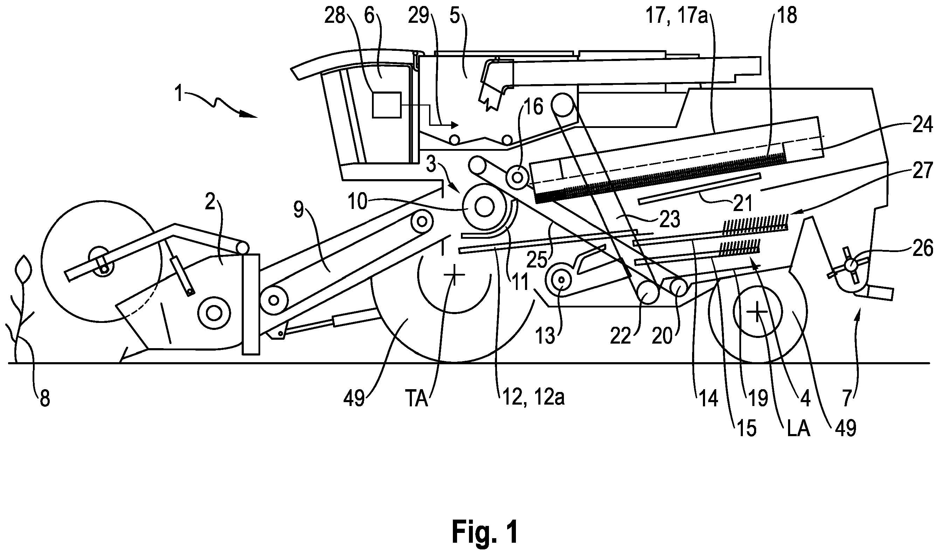

Fig. 1 zeigt eine Darstellung einer schematischen Seitenansicht eines Mähdreschers 1 nach dem Stand der Technik. Der Mähdrescher 1 weist eine Triebachse TA und eine Lenkachse LA auf, an denen jeweils als Bodeneingriffsmittel ausgeführte Räder 49 angeordnet sind. Zumindest an der Triebachse TA können die Bodeneingriffsmittel als Raupenlaufwerke ausgeführt sein. Der Mähdrescher 1 trägt in seinem Frontbereich ein höhenverstellbares Vorsatzgerät 2, welches gewachsenes Erntegut 8 auf großer Breite aberntet, in seitlicher Richtung zusammenführt und an ein Schrägförderorgan 9 übergibt. Durch das Schrägförderorgan 9 gelangt das Erntegut 8 zu einer als Tangentialdreschwerk ausgeführten Dreschvorrichtung 3, die in der Regel als Mehrtrommeldreschwerk ausgeführt ist. Die Dreschvorrichtung 3 gemäß der Darstellung in Fig. 1 umfasst eine Dreschtrommel 10, eine dieser nachgeordnete Wendetrommel 16 und einen die Dreschtrommel 10 abschnittsweise umgebenden Dreschkorb 11. Durch Öffnungen des Dreschkorbs 11 hindurch wird aus dem abgeernteten Erntegut 8 ein im Wesentlichen aus einem Gemisch aus Körnern, Kurzstroh und Spreu bestehender Erntegutstrom abgeschieden, der auf eine als Vorbereitungsboden 12a ausgeführte Fördervorrichtung 12 fällt. Durch Rüttelbewegungen der oszillierend angetriebenen Fördervorrichtung 12 wird das darauf befindliche Erntegut 8 nach hinten in Richtung einer Reinigungsvorrichtung 4 gefördert.

Der nicht durch den Dreschkorb 11 hindurch getretene Teil des Erntegutstroms wird von der Wendetrommel 16 zu einer als Axialrotor 17a oder auch als Hordenschüttler ausgeführten, sich in Längsrichtung des Mähdreschers 1 erstreckenden Abscheidevorrichtung 17 weiterbefördert. Der Axialrotor 17a ist in seinem unteren Bereich von einem halbzylindrischen Sieb 18 umgeben, durch welches ein im Wesentlichen aus einem Gemisch aus Körnern und Ährenbruchstücken bestehender Erntegutstrom abgeschieden wird, der auf eine unterhalb des Siebs 18 angeordnete Fördervorrichtung 21 gelangt. Die Fördervorrichtung 21 gemäß dem Stand der Technik ist üblicherweise als oszillierend angetriebener Rücklaufboden ausgeführt. Im Axialrotor 17a verbleibendes Erntegut 8, im Wesentlichen Stroh, welches am rückwärtigen Ende 24 des Axialrotors 17a ausgeworfen wird, gelangt zu einer Verteilvorrichtung 7 am Heck des Mähdreschers 1. Dort kann es von einer Häckselvorrichtung 26, welche der Verteilvorrichtung 7 vorschaltbar ist, zerkleinert und schließlich auf den Boden eines Feldes ausgebracht werden.

Von der Fördervorrichtung 21 wird das durch das Sieb 18 der Abscheidevorrichtung 17 abgegebene Erntegut 8 vorwärts in Richtung der Drescheinrichtung 3 gefördert und an die Fördervorrichtung 12 übergeben, wo sich der Erntegutstrom der Fördervorrichtung 21 mit dem durch den Dreschkorb 11 hindurch getretenen Erntegutstrom vereinigt, der von dem Vorbereitungsboden 12a an die Reinigungsvorrichtung 4 abgegeben wird.

Die Reinigungsvorrichtung 4 umfasst ein Reinigungsgebläse 13 und eine Siebanordnung 27 mit einem Obersieb 14 sowie einem Untersieb 15. Das Reinigungsgebläse 13 erzeugt einen Luftstrom, mit dem die Siebanordnung 27 beaufschlagt wird. Das in den von dem Vorbereitungsboden 12a beziehungsweise von der Fördervorrichtung 21 kommenden Erntegutströmen enthaltene Korn passiert nacheinander das Obersieb 14 sowie das Untersieb 15 und erreicht über einen darunterliegenden Boden 19 eine Schneckenfördereinrichtung 22 und einen Kornelevator 23, der es in einen im rückwärtigen Bereich der Fahrerkabine 6 angeordneten Korntank 5 fördert.

Anteile des Erntegutstroms, die leichter als das Korn sind, werden beim Herabfallen vom Vorbereitungsboden 12a auf das Obersieb 14, vom Obersieb 14 auf das Untersieb 15 oder vom Untersieb 15 auf den Boden 19 von dem Luftstrom des Reinigungsgebläses 13 erfasst und mitgerissen, erreichen die Verteilvorrichtung 7 und werden über diese ausgeschieden. Schwere, gröbere Anteile des Erntegutstromes, wie unausgedroschene Ährenspitzen, gelangen am rückwärtigen Ende der Siebe 14, 15 in einen unterhalb der Siebe 14, 15 quer verlaufenden Graben. Eine in dem Graben rotierende Schnecke 20 räumt das Material seitwärts zu einem Überkehrelevator 25, der es zurück zu der Dreschvorrichtung 3 befördert.

Des Weiteren umfasst der Mähdrescher 1 eine Steuerungseinrichtung 28, welche der Ansteuerung eines oder mehrerer Arbeitsorgane, wie dem Vorsatzgerät 2, der Dreschvorrichtung 3, der Reinigungsvorrichtung 4 oder der Abscheidevorrichtung 17 dient. Hierzu ist die Steuerungseinrichtung 28 durch eine Signal- und Steuerleitung 29 mit dem jeweiligen anzusteuernden Arbeitsorgan beziehungsweise dessen Aktoren verbunden.

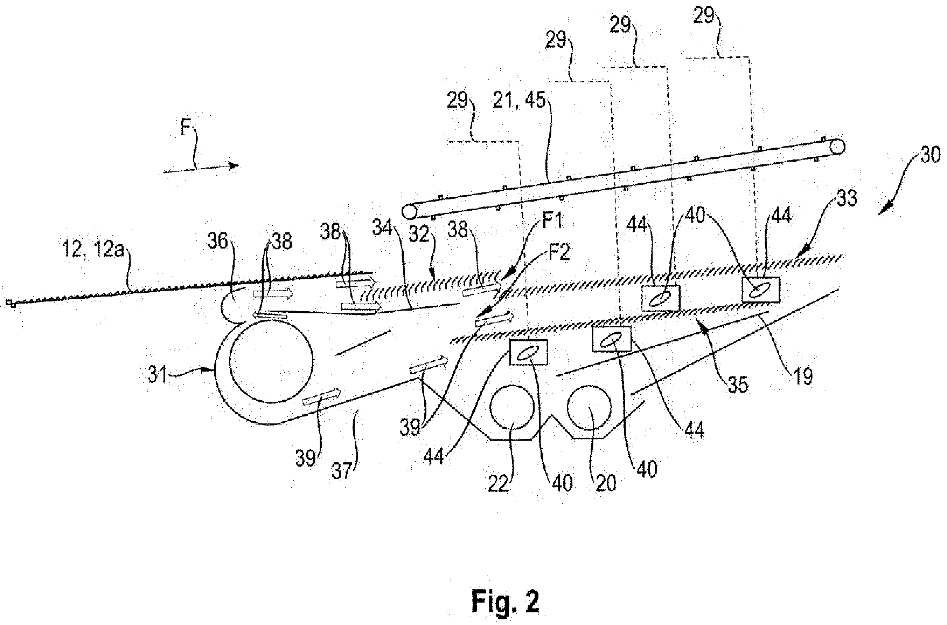

Ausgehend von dem in Fig. 1 dargestellten und vorstehend beschriebenen Mähdrescher 1 liegt der Erfindung die Aufgabe zugrunde, die Reinigungsvorrichtung 4 weiterzubilden, um eine höhere Durchsatzleistung zu erreichen. Die Darstellung in Fig. 2 zeigt eine schematische Darstellung einer erfindungsgemäßen Reinigungsvorrichtung 30 für den Mähdrescher 1.

Die erfindungsgemäße Reinigungsvorrichtung 30 umfasst ein Reinigungsgebläse 31 sowie ein erstes Obersiebsegment 32 und ein in Förderrichtung F des zu reinigenden Erntegutes nachgeordnetes zweites Obersiebsegment 33. Der Reinigungsvorrichtung 30 wird von einer als Bandförderer 45 ausgeführten Fördervorrichtung 21 zu reinigendes Erntegut zugeführt. Das Reinigungsgebläse 31 ist als ein Radialgebläse ausgeführt. Unterhalb des ersten Obersiebsegmentes 32 ist ein Zwischenförderboden 34 angeordnet und unterhalb des zweites Obersiebsegmentes 33 ist ein Untersieb 35 angeordnet. Das Reinigungsgebläse 31 weist einen oberen Luftaustrittsbereich 36 und einen unteren Luftaustrittsbereich 37 auf. Ein aus dem oberen Luftaustrittsbereich 36 ausströmender Luftstrom 38 beaufschlagt zumindest das erste Obersiebsegment 32 oben- und untenseitig. Ein aus dem unteren Luftaustrittsbereich 37 ausströmender Luftstrom 39 beaufschlagt das zweite Obersiebsegment 33 zumindest untenseitig und das Untersieb 35 oben- und untenseitig. Die austretenden Luftströme 38 und 39 sind in Fig. 2 durch Pfeile veranschaulicht. Die Beaufschlagung des ersten Obersiebsegmentes 32 und des zweiten Obersiebsegmentes 33 sowie des Untersiebes 35 an ihrer jeweiligen Oberseite und/oder Unterseite mit dem jeweiligen Luftstrom 38, 39 ist dabei als Überströmung sowie Durchströmung von Siebflächen bzw. Sieböffnungen veränderbarer Größe zu verstehen. Die Siebflächen des ersten und zweiten Obersiebsegmentes 32, 33 sowie des Untersiebes 35 umfassen jeweils eine Vielzahl an Sieblamellen, die um eine quer zur Längsachse des Mähdreschers 1 verlaufende Schwenkachse verschwenkbar sind, um die Sieböffnungsweite des ersten und zweiten Obersiebsegmentes 32, 33 sowie des Untersiebes 35 unabhängig voneinander einstellen und verstellen zu können. Das erste Obersiebsegment 32 und das zweite Obersiebsegment 33 sowie das erste Obersiebsegment 32 und das Untersieb 35 sind einander abschnittsweise überlappend angeordnet.

Vom ersten Obersiebsegment 32 durch Sieböffnungen abgeschiedenes Erntegut gelangt teilweise auf den Zwischenförderboden 34 sowie über eine Fallstufe F1 unmittelbar auf das Untersieb 35. Das übrige Erntegut gelangt über eine weitere Fallstufe F2 auf das dem ersten Obersiebsegment 32 nachgeordnete zweite Obersiebsegment 33. Von dort gelangt das Erntegut auf das unterhalb des zweites Obersiebsegmentes 33 das Untersieb 35. Mit dieser Ausgestaltung der Reinigungsvorrichtung 30 geht eine Effizienzsteigerung einher, da einerseits die wirksame Siebfläche der Reinigungsvorrichtung 30 vergrößert ist und anderseits durch die verschieden dimensionierten Fallstufen F1, F2 die Verweildauer des Erntegutes zum Abtransport der leichten Erntegutbestandteile, d.h. insbesondere der Spreu, im Luftstrom 38 und 39 verlängert ist.

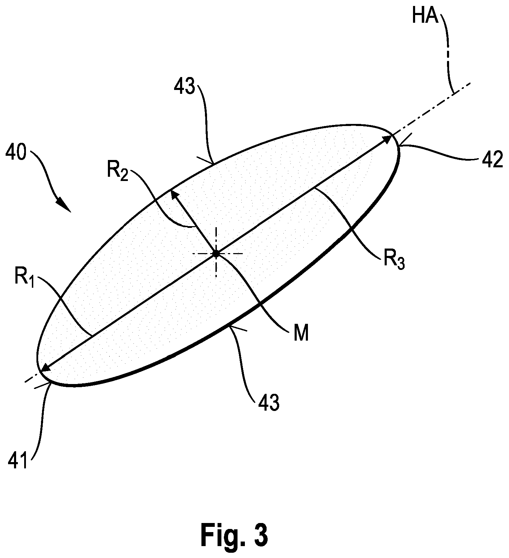

Unterhalb des Untersiebes 35 und/oder zumindest des zweiten Obersiebsegmentes 33 kann jeweils zumindest ein Luftleitelement 40 angeordnet sein, welches einander gegenüberliegende, von spitz zulaufenden Bereichen freie Stirnflächen 41, 42 und zumindest eine diese miteinander verbindende Seitenfläche 43 aufweist. Fig. 3 zeigt schematisch eine Querschnittansicht eines unterhalb des Untersiebes 35 und/oder des zweiten Obersiebsegmentes 33 der Reinigungsvorrichtung 30 angeordneten Luftleitelements 40. Das jeweilige Luftleitelement 40 erstreckt sich im Wesentlichen über die Breite des Untersiebes 35 und/oder zumindest des zweiten Obersiebsegmentes 33. Das jeweilige Luftleitelement 40 weist einander gegenüberliegende, von spitz zulaufenden Bereichen freie Stirnflächen 41, 42 und zumindest eine die Stirnflächen 41,42 miteinander verbindende Seitenfläche 43 auf. Die Stirnflächen 41,42 beziehungsweise Seitenflächen 43 weisen bezogen auf den Querschnittsmittelpunkt M des Luftleitelementes 40 unterschiedliche Krümmungsradien R1, R2, R3 auf, wobei die Krümmungsradien R1, R3 der Stirnflächen 41, 42 größer sind als der Krümmungsradius R2 der zumindest einen die Stirnflächen 41, 42 verbindenden Seitenfläche 43. Weiterhin können die Krümmungsradien R1 und R3 der Stirnflächen 41, 42 gleich oder voneinander abweichend ausgeführt sein. Bevorzugt ist der Krümmungsradius R1 der Stirnfläche 41 größer als der Krümmungsradius 3 der Stirnfläche 42.

Eine durch den Querschnittsmittelpunkt M des Luftleitelements 40 verlaufende Hauptachse HA weist eine Neigung zur Siebebene des Untersiebs 35 bzw. des zweiten Obersiebsegmentes 33 auf. Mittels der Luftleitelemente 40 soll die Wirbelschichtphase als effizienteste Phase der Kornabscheidung durch die Reinigungsvorrichtung 30 in Austragrichtung möglichst ausgedehnt sein, sich also in Längsrichtung des zweiten Obersiebsegmentes 33 bzw. des Untersiebs 35 gesehen möglichst über deren gesamte Länge erstrecken. Das Vorsehen der Luftleitelemente 40 trägt zusätzlich zur Effizienzsteigerung der Reinigungsvorrichtung 30 bei.

Mit dem Bezugszeichen 44 ist exemplarisch ein Aktor bezeichnet, welcher der Verstellung der Luftleitelemente 40 dient. Der Aktor 44 steht mittels der Signal- und Steuerleitung 29 mit der Steuerungseinrichtung 28 in Verbindung. Der Aktor 44 kann in dem dargestellten Ausführungsbeispiel jeweils als einzelmotorischer Antrieb ausgeführt sein, welcher jeweils einem Luftleitelement 40 zugeordnet ist. Somit ist eine individuelle Ansteuerung der Luftleitelement 40 durch eine unabhängige Ansteuerung der Aktoren 44 möglich. Die Ansteuerung der Aktoren 44 zur Verstellung der Luftleitelemente 40 durch die Steuerungseinrichtung 28 erfolgt in Abhängigkeit von Erntegut- und/oder Betriebsparametern. Unter Erntegutparametern sind neben der Erntegutart auch Parameter wie Feuchtigkeit des Erntegutes oder dergleichen zu verstehen, die den Vorgang der Reinigung beeinflussen können. Unter Betriebsparametern des Mähdreschers 1 sind die Parameter zu verstehen, die sich während des laufenden Erntebetriebes einstellen. Diese können sich fortlaufend ändern, wobei in Abhängigkeit von der Größenordnung der Änderung eine durch die Steuerungseinrichtung 28 ansteuerbare Anpassung der Neigung und Position der Luftleitelemente 40 durchführbar ist. Zudem kann der jeweilige Abstand der Luftleitelemente 40 zu dem Untersieb 35 und/oder dem zweiten Obersiebsegment 33 in vertikaler Richtung variierbar sein, indem die Luftleitelemente 40 sowie die zugehörigen Aktoren 44 beispielsweise in einer Art Kulissenführung verschieblich sind. Des Weiteren kann der jeweilige Abstand der Luftleitelemente 40 zu dem Untersieb 35 und/oder dem zweiten Obersiebsegment 3 in horizontaler Richtung variierbar sein.

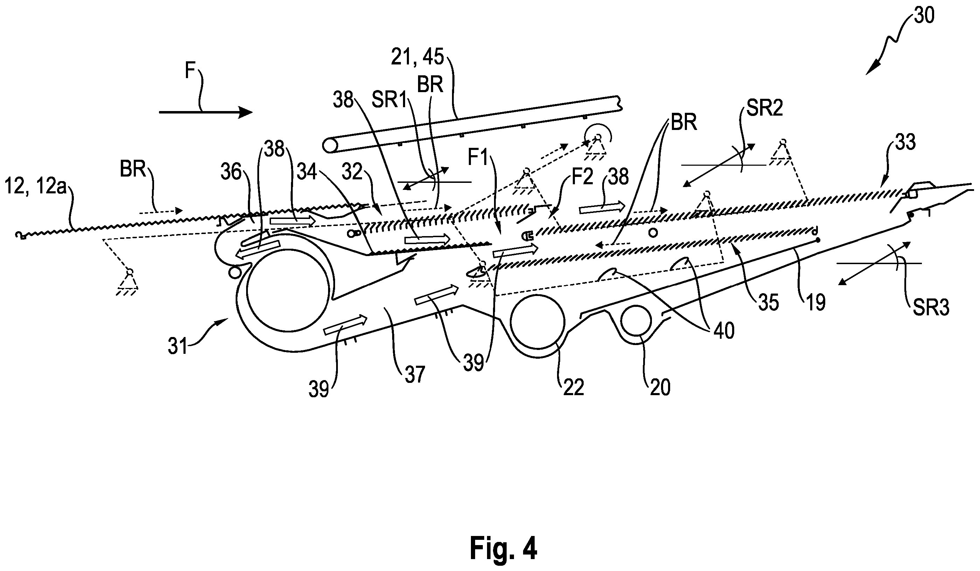

In Fig. 4 ist eine schematische Darstellung eines Antriebsschemas der Reinigungsvorrichtung 30 gemäß Fig. 2 gezeigt. Für einen oszillierenden Antrieb der Fördervorrichtung 12a, des ersten Obersiebsegments 32, des zweiten Obersiebsegments 33, des Zwischenförderbodens 34 sowie des Untersiebes 35 sind diesen jeweils - nicht dargestellte - Aktoren zugeordnet, die durch die Steuerungseinrichtung 28 unabhängig voneinander ansteuerbar sind. Auf diese Weise lassen sich Schwingungsrichtungen BR sowie Schwingungsfrequenzen der schwingenden Komponenten der Reinigungsvorrichtung 4 separat ändern. Des Weiteren weisen das erste Obersiebsegment 32, das zweite Obersiebsegment 33 sowie das Untersieb 35 unterschiedliche Schwingungsrichtungswinkel SR1, SR2, SR3 auf. Mit SR1 ist der Schwingungsrichtungswinkel des ersten Obersiebsegments 32, mit SR2 ist der Schwingungsrichtungswinkel des zweiten Obersiebsegments 33 und mit SR3 ist der Schwingungsrichtungswinkel des Untersiebes 35 bezeichnet. Die Schwingungsrichtungswinkel SR1 und SR2 sind größer als der Schwingungsrichtungswinkel SR3. Die Schwingungsrichtungswinkel SR1, SR2, SR3 können einstellbar sein, um auf verschiedene Erntebedingungen reagieren zu können.

Zudem zeigt die Darstellung in Fig. 4 die als Bandförderer 45 ausgeführte Fördervorrichtung 21. Der Bandförderer 45 tritt an die Stelle des konventionellen, oszillierend angetriebenen Rücklaufbodens, welcher für das Ausführen der Schwingungen in vertikaler Richtung sowohl in Richtung der Abscheidevorrichtung 17 als auch in Richtung der Reinigungsvorrichtung 4 (vergleiche Fig. 1) mehr Bauraum benötigt als der Bandförderer 45. Der ortsfeste Bandförderer 45 führt lediglich eine translatorische Bewegung des Förderbandes aus, um das Erntegut zu fördern und an die Reinigungsvorrichtung 30 abzugeben. Der Bandförderer 45 benötigt aufgrund seiner statischen Anordnung bezogen auf die Reinigungsvorrichtung 30 weniger Bauraum, so dass der Reinigungsvorrichtung 30, und dabei insbesondere den Obersiebsegmenten 32 und 33 sowie deren Aktoren und Lagerstellen mehr Bauraum zur Verfügung steht.

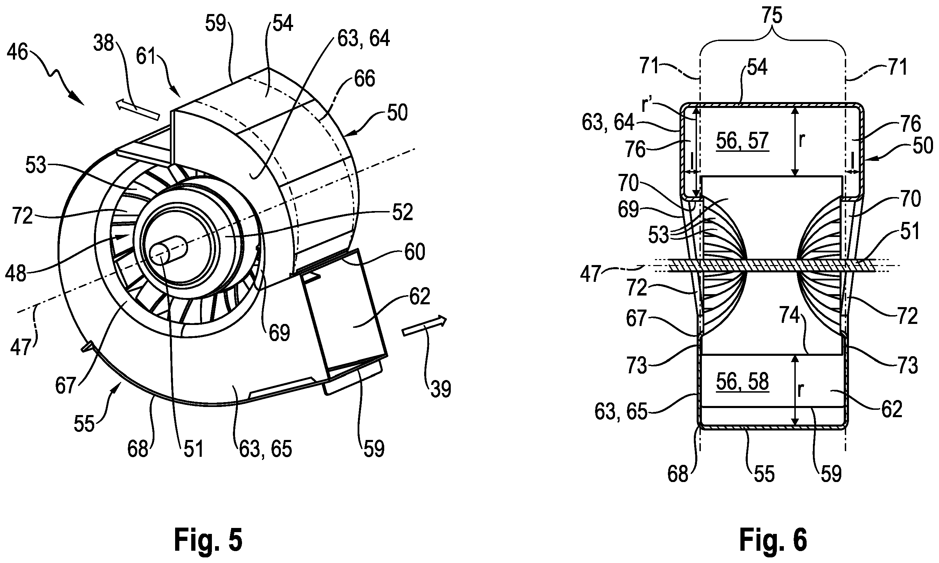

Fig. 5 zeigt eine perspektivische Ansicht eines Gebläsemoduls 46 des Reinigungsgebläses 31. Fig. 6 zeigt einen axialen Schnitt durch das Gebläsemodul 46. Das Gebläsemodul 46 umfasst mehrere entlang einer sich senkrecht zur Schnittebene der Fig. 1 erstreckenden Achse 47 aufgereihte Gebläsemodule 46. Die Gebläsemodule 46 umfassen jeweils einen Rotor 48 und ein den Rotor 48 umgebendes Gehäuse 50. Der Rotor 48 kann, wie in der perspektivischen Ansicht der Fig. 2 gezeigt und in DE 10 2011 000 130 A1 im Detail beschrieben, an einer drehfesten Welle 51 montiert sein und eine Nabe 52 in Form eines Außenläufermotors mit einer Vielzahl von vom Außenläufer des Rotors 48 radial abstehenden Luftschaufeln 53 haben; es können die Luftschaufeln 53 aber auch starr an einer drehbaren, allen Gebläsemodulen 46 gemeinsamen Welle 51 angebracht sein. Die Luftschaufeln 53 definieren durch Drehung um die Achse 47 einen zylindrischen Rotationskörper mit zwei zur Achse 47 senkrechten Stirnflächen 73 und einer Umfangsfläche 74.

Das Gehäuse 50 umfasst zwei Umfangswandsektoren 54, 55, die sich in einem Schnitt quer zur Achse 47 jeweils entlang einer Spirale, vorzugsweise einer archimedischen Spirale, erstrecken. Die Umfangswandsektoren 54, 55 erstrecken sich über in etwa gleich große Teile des Umfangs des Gehäuses 50. Der Radius der Spiralen nimmt jeweils in Drehrichtung des Rotors 48 zu, so dass ein sich zwischen der Umfangsfläche 74 und den Umfangswandsektoren 54, 55 um den Rotor 48 herum erstreckender Gebläsekanal 56 in zwei Umfangsabschnitte 57, 58 gegliedert ist, deren radiale Abmessung r jeweils in Drehrichtung des Rotors 48, linear mit dem Drehwinkel zunimmt, bis eine jeweils von einem achsfernen Rand 59 des einen Umfangswandsektors 54, 55 und einen achsnahen Rand 60 des anderen Umfangswandsektors 55, 54 begrenzte Ausströmöffnung 61 bzw. 62 erreicht ist.

Der Umfangswandsektor 54 hat die Form eines symmetrischen Trapezes, wobei sein achsnaher Rand 60 eine kurze Grundseite und der achsferne Rand 59 eine lange Grundseite des Trapezes bildet. Der Umfangswandsektor 55 ist in der Ausgestaltung gemäß Fig. 5 rechteckig, könnte aber ebenfalls trapezförmig und mit zunehmender Entfernung von der Achse 47 verbreitert sein.

Zwei Stirnseiten 63 des Gehäuses 50 sind jeweils aus zwei Flachmaterialzuschnitten 64, 65 zusammengefügt. Der Flachmaterialzuschnitt 65 erstreckt sich in einer zur Achse 47 senkrechten Ebene 66, wobei ein innerer oder achsnaher Rand 67 und ein äußerer Rand 68 des Flachmaterialzuschnitts 65 einen Kreisbogen bzw. eine Spirale um die Achse 47 beschreiben; der äußere Rand 68 ist mit einem Längsrand des Umfangswandsektors 55 verbunden.

Ein innerer Rand 69 des Flachmaterialzuschnitts 64 verläuft auf einer Schraubenlinie um die Achse 47. Von dem inneren Rand 69 aus erstreckt sich eine innere Wand 70 bis zur Ebene 71, so dass der dem Rotor 48 zugewandte Rand dieser Wand 70 und der innere Rand 67 des Zuschnitts 65 eine Ansaugöffnung 72 des Gehäuses 50 in der Ebene 71 begrenzen.

Die Stirnflächen 73 an beiden Seiten des Rotors 48 liegen den Flachmaterialzuschnitten 65 eng benachbart gegenüber, um einen Rückfluss von im Gebläsekanal 56 unter erhöhtem Druck stehender Luft aus dem Umfangsabschnitt 58 zur Ansaugöffnung 72 zu verhindern. Der Umfangsabschnitt 58 des Gebläsekanals 56 hat einen Kernbereich 75, der wie der gesamte Umfangsabschnitt 65 zwischen den Ebenen 71 liegt, und Erweiterungsbereiche 76 jenseits der Ebenen 71. Sowohl die radiale Abmessung r' als auch die axiale Abmessung I der Erweiterungsbereiche 76 ist minimal in unmittelbarer Nähe zur Ausströmöffnung 62 des Umfangsabschnitt 58 und nimmt von dort aus bis zur Ausströmöffnung 61 in Umfangsrichtung stetig zu. Die axiale Abmessung I der Erweiterungsbereiche 76 ist größer als die radiale Abmessung r des Kernbereichs 75, da sich die Erweiterungsbereiche 76 über die Umfangsfläche 74 hinaus in Richtung der Achse 74 ausdehnen.

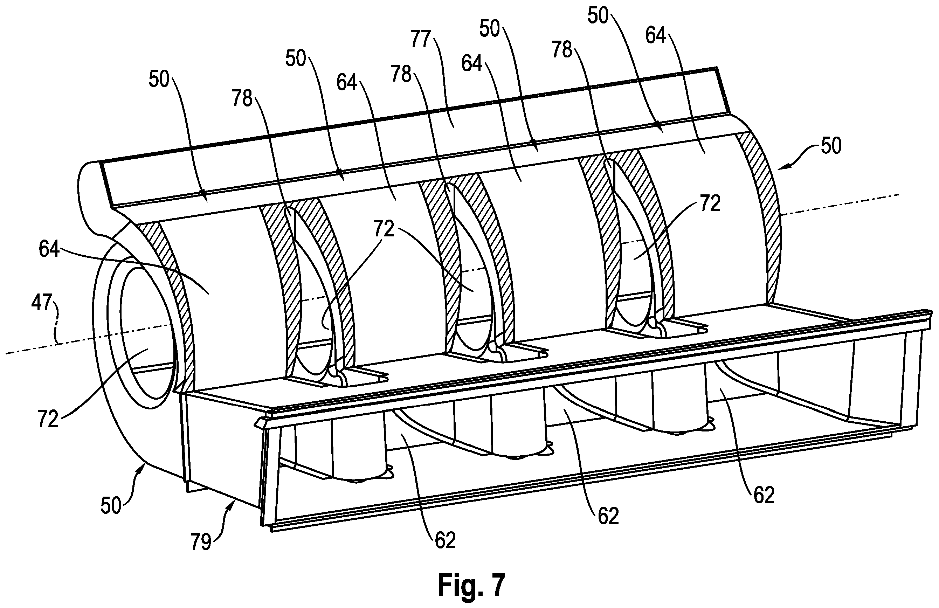

Fig. 7 zeigt untereinander verbundene Gehäuse 50 mehrerer Gebläsemodule 46. Die Form der Gehäuse 50 ist dieselbe wie in Fig. 5 und Fig. 6 gezeigt und weiter oben beschrieben. Die Gehäuse 50 sind entlang der Achse 47 so dicht angeordnet, dass die Ränder ihrer (vom Betrachter abgewandten) Ausströmöffnungen 61 einander berühren. Diesen Ausströmöffnungen 61 liegt ein sich in Richtung der Achse 47 langgestreckter Abströmkanal 77 gegenüber, der die an den Ausströmöffnungen 61 austretende Luft umlenkt, so dass sie, wenn das Reinigungsgebläse 31 im Mähdrescher 1 eingebaut ist, entgegen der Fahrtrichtung umgelenkt wird, um das erste Obersiebsegment 32 der hinter dem Reinigungsgebläse 31 montierten Siebanordnung zu erreichen. Der Siebanordnung zugewandte Lücken 78 zwischen den trapezförmigen Flachmaterialzuschnitten 64 der Gehäuse 50 sind zu dem Abströmkanal 77 hin verengt. Die Zufuhr von Frischluft zu den sich an den Stirnseiten der Gehäuse 50 gegenüberliegenden Ansaugöffnungen 72 ist dadurch nicht merklich eingeschränkt, da der Abstand zwischen den Flachmaterialzuschnitten 64 der Gehäuse 50 groß bleibt und einen ungehinderten Frischluftzustrom insbesondere von unten und von vorn ermöglicht. Die Ausströmöffnungen 62 der Gehäuse 50 sind voneinander in Richtung der Achse 47 beabstandet und münden in einen von oben gesehen kammförmigen Ausströmkanal 79. Indem die Gehäuse 50 an dem Abströmkanal 77 und am Ausströmkanal 79 befestigt werden, kann das Reinigungsgebläse 31 komplett außerhalb der Mähdrescherkarosserie vormontiert und als Baueinheit in diese eingefügt werden.

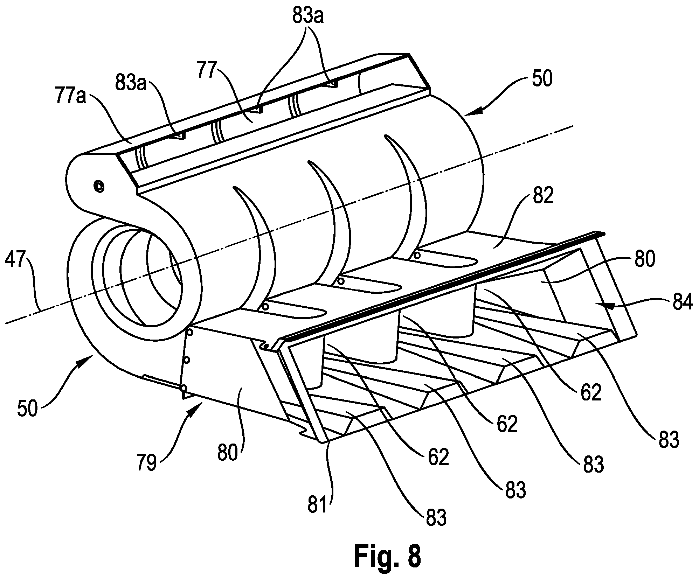

In Fig. 8 ist eine perspektivische Ansicht untereinander verbundener Gehäuse 50 des Reinigungsgebläses 31 mit einem Ausströmkanal 79 gemäß einer bevorzugten Ausführungsform dargestellt. Der sich an die zweite Ausströmöffnung 62 anschließende Ausströmkanal 79 ist durch zumindest zwei vertikal verlaufende Seitenwände 80 und je ein zueinander parallel angeordnetes Bodenelement 81 und Deckelelement 82 begrenzt ist. Zumindest auf dem Bodenelement 81 sind einen trapezförmigen Querschnitt aufweisende Leitelemente 83 angeordnet. Die Leitelemente 83 erstrecken sich ausgehend von der jeweiligen zweiten Ausströmöffnung 62 des Gebläsemoduls 46 in Richtung Austrittsöffnung 84 des Ausströmkanals 79. Dabei weisen die Leitelemente 83 einen in Richtung der Austrittsöffnung 84 ansteigenden Höhenverlauf auf. Die die Leitelemente 83 sind rampenförmig ausgeführt. In dem Abströmkanal 77 können Strömungsleitelemente 83a angeordnet sein, die der Umlenkung und/oder Verteilung des austretenden Luftstromes dienen. Vorzugsweise sind die Strömungsleitelemente 83a distal zur Achse 47 an einer zu der Achse 47 parallelen Wandfläche 77a des Abströmkanals 77 angeordnet. Die Wandfläche 77a schließt sich tangential an die Umfangswandsektoren 54 der Gehäuse 50 an. Die Strömungsleitelemente 83a können als Blechbauteile ausgeführt sein. Die Strömungsleitelemente 83a erstrecken sich abschnittsweise in radialer Richtung zur Achse 47 hin.

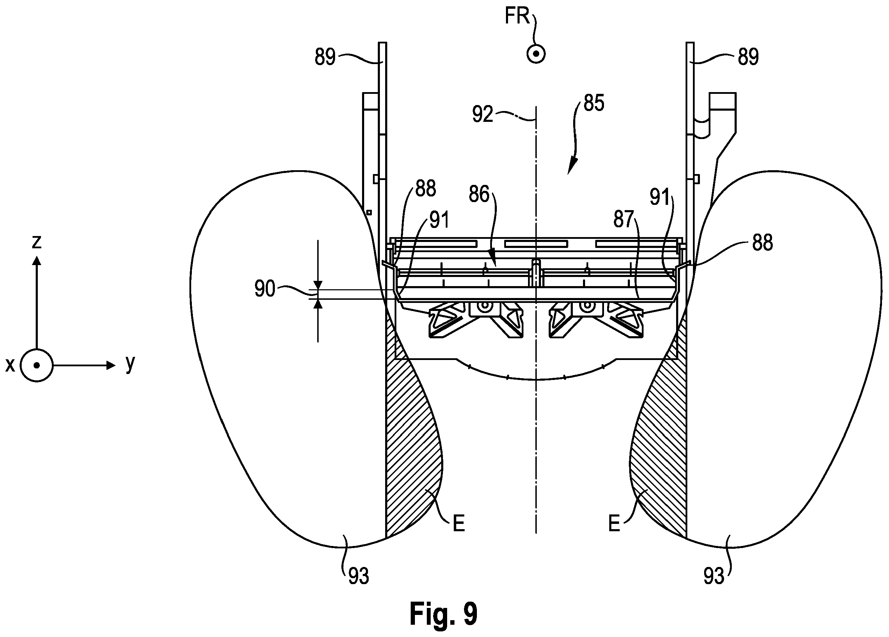

Fig. 9 zeigt schematisch ein Schnittbild durch den Mähdrescher 1 von der Front des Mähdreschers 1 aus gesehen. Mit FR ist die Fahrtrichtung des Mähdreschers 1 bezeichnet. Die Lenkachse LA mit den daran angeordneten Rädern 49 ist unterhalb eines im Wesentlichen rechteckförmigen Siebkastens 85 der Reinigungsvorrichtung 30 angeordnet. Anstelle der Räder 49 ist jeweils schematisch eine durch das Lenken der Räder 49 definierte Hüllkurve 93 gezeigt. Die Hüllkurve 93 umhüllt alle Positionen, in denen die Räder 49 aufgrund von Lenkbewegungen positioniert sein können. Der Siebkasten 85 erstreckt sich Längsrichtung x des Mähdreschers 1 abschnittsweise zwischen den Rädern 49 und in Querrichtung y im Wesentlichen über die Breite des Mähdreschers 1 zwischen vertikal verlaufenden Karosserieelementen 89. Der Siebkasten 85 weist eine oberhalb der Räder 49 befindliche Siebanordnungsebene 86 und einen zwischen den Rädern 49 befindlichen Bodenbereich 87 auf. Die Siebanordnungsebene 86 und der Bodenbereich 87 sind zwischen zwei zueinander parallelen, sich in Längsrichtung x des Mähdreschers 1 erstreckenden, in Hochrichtung z des Mähdreschers 1 verlaufenden Rahmenabschnitten 88 angeordnet.

Zur Vergrößerung des Lenkwinkels weisen die Rahmenabschnitte 88 jeweils in einem sich in Hochrichtung z erstreckenden Übergangsbereich 90 von der Siebanordnungsebene 86 zu der Bodenebene 87 eine in Querrichtung y des Mähdreschers weisende Verjüngung 91 auf. Mit Verjüngung 91 ist ein in Querrichtung y abnehmender Abstand zwischen den Rahmenabschnitte 88 gemeint. Die Rahmenabschnitte 88 sind symmetrisch ausgebildet. Der jeweilige Übergangsbereich 90 der Rahmenabschnitte 88 ist stufenlos ausgebildet. Besonders bevorzugt sind die Verjüngungen 91 an den Rahmenabschnitten 88 spiegelbildlich zueinander vorgesehen. Somit ist der Siebkasten 85 im Wesentlichen flächensymmetrisch zu einer in Hochrichtung z verlaufenden Mittelebene 92 ausgebildet. Die jeweilige Verjüngung 91 der Rahmenabschnitte 88 ist zumindest so groß wie ein durch eine Position des Rades 49 bei maximalem Lenkwinkel definierter Eindringbereich E des Rades 49 in einen, insbesondere außerhalb der Verjüngung 91 vorhandenen, Siebkastenquerschnitt. Zumindest ist die Verjüngung 91 aber größer als der Eindringbereich E ausgeführt, so dass das Rad 49 nicht an den Siebkasten 85 anstößt.

**Bezugszeichenliste**

| | | | |
|---|---|---|---|
| 1 | Mähdrescher | 32 | Erstes Obersiebsegment |
| 2 | Vorsatzgerät | 33 | Zweites Obersiebsegment |
| 3 | Dreschvorrichtung | 34 | Zwischenförderboden |
| 4 | Reinigungsvorrichtung | 35 | Untersieb |
| 5 | Korntank | 36 | Oberer Luftaustrittsbereich |
| 6 | Kabine | 37 | Unterer Luftaustrittsbereich |
| 7 | Verteilvorrichtung | 38 | Luftstrom |
| 8 | Erntegut | 39 | Luftstrom |
| 9 | Schrägförderorgan | 40 | Luftleitelement |
| 10 | Dreschtrommel | 41 | Stirnfläche |
| 11 | Dreschkorb | 42 | Stirnfläche |
| 12 | Fördervorrichtung | 43 | Seitenfläche |
| 12a | Vorbereitungsboden | 44 | Aktor |
| 13 | Reinigungsgebläse | 45 | Bandförderer |
| 14 | Obersieb | 46 | Gebläsemodul |
| 15 | Untersieb | 47 | Achse |
| 16 | Wendetrommel | 48 | Rotor |
| 17 | Abscheidevorrichtung | 49 | Rad |
| 17a | Axialrotor | 50 | Gehäuse |
| 18 | Sieb | 51 | Welle |
| 19 | Boden | 52 | Nabe |
| 20 | Schnecke | 53 | Luftschaufeln |
| 21 | Fördervorrichtung | 54 | Umfangswandsektor |
| 22 | Schneckenfördereinrichtung | 55 | Umfangswandsektor |
| 23 | Kornelevator | 56 | Gebläsekanal |
| 24 | Rückwärtiges Ende von 17a | 57 | Umfangsabschnitt |
| 25 | Überkehrelevator | 58 | Umfangsabschnitt |
| 26 | Häckselvorrichtung | 59 | Achsferner Rand |
| 27 | Siebanordnung | 60 | achsnaher Rand |
| 28 | Steuerungseinrichtung | 61 | Ausströmöffnung |
| 29 | Signal- und Steuerleitung | 62 | Ausströmöffnung |
| 30 | Reinigungsvorrichtung | 63 | Stirnseite |
| 31 | Reinigungsgebläse | 64 | Flachmaterialzuschnitt |
| 65 | Flachmaterialzuschnitt | 93 | Hüllkurve |
| 66 | Ebene | LA | Lenkachse |
| 67 | Innerer Rand | TA | Triebachse |
| 68 | Äußerer Rand | F1 | Fallstufe |
| 69 | Innerer Rand | F2 | Fallstufe |
| 70 | Innere Wand | HA | Hauptachse |
| 71 | Ebene | M | Querschnittsmittelpunkt |
| 72 | Ansaugöffnung | R1 | Radius von 41 |
| 73 | Stirnfläche | R2 | Radius von 42 |
| 74 | Umfangsfläche | R3 | Radius von 43 |
| 75 | Kernbereich | BR | Schwingungsrichtung |
| 76 | Erweiterungsbereich | SR1 | Schwingungsrichtungswinkel |
| 77 | Abströmkanal | SR2 | Schwingungsrichtungswinkel |
| 77a | Wandabschnitt | SR3 | Schwingungsrichtungswinkel |
| 78 | Lücke | I | Axiale Abmessung |
| 79 | Ausströmkanal | r | Radiale Abmessung von 57 |
| 80 | Seitenwand | r' | Radiale Abmessung von 76 |
| 81 | Bodenelement | FR | Fahrtrichtung |
| 82 | Deckelelement | E | Eindringbereich |
| 83 | Leitelement | x | Längsrichtung |
| 83a | Strömungsleitelement | y | Querrichtung |
| 84 | Austrittsöffnung | z | Hochrichtung |
| 85 | Siebkasten | | |
| 86 | Siebanordnungsebene | | |
| 87 | Bodenbereich | | |
| 88 | Rahmenabschnitt | | |
| 89 | Karosserieelement | | |
| 90 | Übergangsbereich | | |
| 91 | Verjüngung | | |
| 92 | Mittelebene | | |

## Patentansprüche

1. Mähdrescher (1) mit einer Dreschvorrichtung (3) und einer Abscheidevorrichtung (17), denen jeweils eine Fördervorrichtung (12, 21) zugeordnet ist, wobei die Fördervorrichtungen (12, 21) dazu eingerichtet sind, einer Reinigungsvorrichtung (30) einen von der Dreschvorrichtung (3) und der Abscheidevorrichtung (17) abgeschiedenen zu reinigenden Erntegutstrom zuzuführen, wobei,
- dass die Reinigungsvorrichtung (30) ein Reinigungsgebläse (31) sowie ein erstes Obersiebsegment (32) und ein in Förderrichtung nachgeordnetes zweites Obersiebsegment (33) umfasst,
- dass unterhalb des ersten Obersiebsegmentes (32) ein Zwischenförderboden (34) angeordnet ist und unterhalb des zweites Obersiebsegmentes (33) ein Untersieb (35),
- dass das Reinigungsgebläse (31) einen oberen Luftaustrittsbereich (36) und einen unteren Luftaustrittsbereich (37) aufweist, wobei ein aus dem oberen Luftaustrittsbereich (36) ausströmender Luftstrom (38) zumindest das erste Obersiebsegment (32) oben- und untenseitig beaufschlagt und ein aus dem unteren Luftaustrittsbereich (37) ausströmender Luftstrom (39) das zweite Obersiebsegment (33) zumindest untenseitig und das Untersieb (35) oben- und untenseitig beaufschlagt, **dadurch gekennzeichnet, dass** für einen oszillierenden Antrieb des ersten Obersiebsegments (32), des zweiten Obersiebsegments (33), des Zwischenförderbodens (34) sowie des Untersiebs (35) diesen jeweils Aktoren zugeordnet sind, die durch eine Steuerungseinrichtung (28) unabhängig voneinander ansteuerbar sind.

2. Mähdrescher (1) nach Anspruch 1, **dadurch gekennzeichnet, dass** das erste Obersiebsegment (32), das zweite Obersiebsegment (33) sowie das Untersieb (35) unterschiedliche Schwingungsrichtungswinkel (SR1, SR2, SR3) aufweisen.

3. Mähdrescher (1) nach einem der Ansprüche 1 bis 2, **dadurch gekennzeichnet, dass** die der Abscheidevorrichtung (17) zugeordnete Fördervorrichtung (21) als Bandförderer (45) ausgeführt ist.

4. Mähdrescher (1) nach einem der vorhergehenden Ansprüche, **dadurch gekennzeichnet, dass** das Reinigungsgebläse (31) einen um eine Achse (47) drehbaren Rotor (48) und ein Gehäuse (50) umfasst, wobei das Gehäuse (50) wenigstens eine Ansaugöffnung (72) und eine erste Ausströmöffnung (61) aufweist und einen sich um den Rotor (48) herum erstreckenden Gebläsekanal (56) begrenzt, wobei die axiale Ausdehnung des Gebläsekanals(56) entlang des Umfangs in Drehrichtung des Rotors (48) zur ersten Ausströmöffnung (61) hin zunimmt.

5. Mähdrescher (1) nach Anspruch 4, **dadurch gekennzeichnet, dass** ein Rand (67) der Ansaugöffnung (72) eine zur Achse (47) senkrechte Ebene (71) definiert und den Gebläsekanal (56) in einen radial nach innen vom Rotor (48) begrenzten Kernbereich (75) und einen Erweiterungsbereich (76) unterteilt, dessen Querschnitt entlang des Umfangs in Drehrichtung des Rotors (48) zur ersten Ausströmöffnung (61) hin zunimmt.

6. Mähdrescher (1) nach Anspruch 4 oder 5, **dadurch gekennzeichnet, dass** an der ersten Ausströmöffnung (61) eine Umlenkfläche zum Umlenken des aus der ersten Ausströmöffnung (61) austretenden Luftstroms (38) entgegen der Drehrichtung des Rotors (48) angeordnet ist.

7. Mähdrescher nach einem der Ansprüche 4 bis 6, **dadurch gekennzeichnet, dass** mehrere Rotoren (48) und Gehäuse (50) entlang der Achse (47) angeordnet sind.

8. Mähdrescher (1) nach Anspruch 7, **dadurch gekennzeichnet, dass** bei mehreren entlang der Achse (47) angeordneten Rotoren (48) sich ein über die Breite der Anordnung erstreckender Abströmkanal (71) an die ersten Ausströmöffnungen (61) anschließt, welcher den austretenden Luftstrom (38) entgegen der Fahrtrichtung umlenkt.

9. Mähdrescher (1) nach einem der Ansprüche 4 bis 8, **dadurch gekennzeichnet, dass** das Gehäuse (50) eine zweite Ausströmöffnung (62) aufweist und dass die axiale Ausdehnung des Gebläsekanals (56) in einem sich in Drehrichtung des Rotors (48) von der ersten Ausströmöffnung (61) zur zweiten Ausströmöffnung (62) erstreckenden Umfangsabschnitt (58) des Gebläsekanals (56) konstant ist.

10. Mähdrescher (1) nach Anspruch 9, **dadurch gekennzeichnet, dass** sich an die zweite Ausströmöffnung (62) ein Ausströmkanal (79) anschließt, der durch zumindest zwei vertikal verlaufende Seitenwände (80) und je ein zueinander parallel angeordnetes Bodenelement (81) und Deckelelement (82) begrenzt ist, wobei zumindest auf dem Bodenelement (81) einen trapezförmigen Querschnitt aufweisende Leitelemente (83) angeordnet sind, die sich in Richtung Austrittsöffnung (84) des Ausströmkanals (79) erstrecken.

11. Mähdrescher (1) nach Anspruch 10, **dadurch gekennzeichnet, dass** die Leitelemente (83) einen in Richtung der Austrittsöffnung (84) ansteigenden Höhenverlauf aufweisen.

12. Mähdrescher (1) nach einem der vorhergehenden Ansprüche, **dadurch gekennzeichnet, dass** unterhalb des Untersiebes (35) und/oder zumindest des zweiten Obersiebsegmentes (33) jeweils zumindest ein Luftleitelement (40) angeordnet ist, welches einander gegenüberliegende, von spitz zulaufenden Bereichen freie Stirnflächen (41, 42) und zumindest eine diese miteinander verbindende Seitenfläche (43) aufweist.

13. Mähdrescher (1) nach Anspruch 12, **dadurch gekennzeichnet, dass** das jeweilige Luftleitelement (40) eine Neigung zur jeweiligen Siebebene des Untersiebes (35) und/oder zumindest des zweiten Obersiebsegmentes (33) aufweist.

14. Mähdrescher (1) nach Anspruch 12 oder 13, **dadurch gekennzeichnet, dass** die Neigung einer die Stirnflächen (41, 42) in ihren am weitesten zueinander beabstanden Punkten verbindenden gedachten Hauptachse (HA) des jeweiligen Luftleitelementes (40) durch zumindest einen Aktor (44) einstellbar ist.

15. Mähdrescher (1) nach einem der Ansprüche 12 bis 14, **dadurch gekennzeichnet, dass** der jeweilige Abstand der Luftleitelemente (40) zu dem Untersieb (35) und/oder dem Obersieb (33) in vertikaler Richtung variierbar ist.

16. Mähdrescher (1) nach einem der Ansprüche 12 bis 15, **dadurch gekennzeichnet, dass** der jeweilige Abstand der Luftleitelemente (40) zu dem Untersieb (35) und/oder dem Obersieb (33) in horizontaler Richtung variierbar ist.

17. Mähdrescher (1) nach einem der vorhergehenden Ansprüche, **dadurch gekennzeichnet, dass** unterhalb eines Siebkastens (85) der Reinigungsvorrichtung (30) eine Lenkachse (LA) mit daran angeordneten Rädern (49) angeordnet ist, wobei sich der Siebkasten (85) abschnittsweise zwischen den Rädern (49) im Wesentlichen über die Breite des Mähdreschers (1) erstreckt, dass der Siebkasten (85) eine oberhalb der Räder (49) befindliche Siebanordnungsebene (86) und einen zwischen den Rädern (49) befindlichen Bodenbereich (87) aufweist, wobei die Siebanordnungsebene (86) und der Bodenbereich (87) zwischen zwei zueinander parallelen, sich in Längsrichtung (x) des Mähdreschers (1) erstreckenden, in Hochrichtung (z) des Mähdreschers (1) verlaufenden Rahmenabschnitten (88) angeordnet sind, wobei zur Vergrößerung des Lenkwinkels die Rahmenabschnitte (88) jeweils in einem Übergangsbereich (90) von der Siebanordnungsebene (86) zu der Bodenebene (87) eine in Querrichtung (y) des Mähdreschers (1) weisende Verjüngung (91) aufweisen.

18. Mähdrescher (1) nach Anspruch 17, **dadurch gekennzeichnet, dass** die Rahmenabschnitte (88) symmetrisch ausgebildet sind.

19. Mähdrescher (1) nach Anspruch 17 oder 18, **dadurch gekennzeichnet, dass** der jeweilige Übergangsbereich (90) der Rahmenabschnitte (88) stufenlos ausgebildet ist.

## Claims

1. A combine harvester (1) with a threshing device (3) and a separating device (17), respectively associated with a conveying device (12, 21), wherein the conveying devices (12, 21) are configured to feed a flow of harvested material separated from the threshing device (3) and the separating device (17) and which is to be cleaned to a cleaning device (30), wherein
- the cleaning device (30) comprises a cleaning fan (31) as well as a first upper sieve segment (32) and a second upper sieve segment (33) which is disposed downstream in the conveying direction,
- an intermediate grain pan (34) is disposed below the first upper sieve segment (32) and a lower sieve (35) is disposed below the second upper sieve segment (33),
- the cleaning fan (31) has an upper air outlet region (36) and a lower air outlet region (37), wherein an airflow (38) emanating from the upper air outlet region (36) impinges on the upper side and lower side of at least the first upper sieve segment (32) and an airflow (39) emanating from the lower air outlet region (37) impinges on at least the lower side of the second upper sieve segment (33) and on the upper side and lower side of the lower sieve (35), **characterized in that**, for an oscillating drive of the first upper sieve segment (32), of the second upper sieve segment (33), of the intermediate grain pan (34) as well as of the lower sieve (35), these are associated with respective actuators which can be controlled independently of each other by a control device (28).

2. The combine harvester (1) according to claim 1, **characterized in that** the first upper sieve segment (32), the second upper sieve segment (33) as well as the lower sieve (35) have different oscillation direction angles (SR1, SR2, SR3).

3. The combine harvester (1) according to one of claims 1 to 2, **characterized in that** the conveying device (21) associated with the separating device (17) is constructed as a belt conveyor (45).

4. The combine harvester (1) according to one of the preceding claims, **characterized in that** the cleaning fan (31) comprises a rotor (48) which can rotate about an axis (47) and a housing (50), wherein the housing (50) has at least an intake opening (72) and a first outflow opening (61) and delimits a fan duct (56) extending around the rotor (48), wherein the axial extent of the fan duct (56) increases along the circumference in the direction of rotation of the rotor (48) towards the first outflow opening (61).

5. The combine harvester (1) according to claim 4, **characterized in that** an edge (67) of the intake opening (72) defines a plane (71) which is perpendicular to the axis (47) and divides the fan duct (56) into a core region (75) which is radially inwardly delimited by the rotor (48) and a broadening region (76) the cross section of which increases along the circumference in the direction of rotation of the rotor (48) towards the first outflow opening (61).

6. The combine harvester (1) according to claim 4 or claim 5, **characterized in that** a deflecting surface is disposed at the first outflow opening (61) in order to deflect the airflow (38) exiting from the first outflow opening (61) against the direction of rotation of the rotor (48).

7. The combine harvester according to one of claims 4 to 6, **characterized in that** a plurality of rotors (48) and housings (50) are disposed along the axis (47).

8. The combine harvester (1) according to claim 7, **characterized in that**, in the case in which a plurality of rotors (48) is disposed along the axis (47), a diverting duct (71) which extends over the width of the assembly is connected to the first outflow openings (61) and deflects the exiting airflow (38) against the direction of travel.

9. The combine harvester (1) according to one of claims 4 to 8, **characterized in that** the housing (50) has a second outflow opening (62) and **in that** the axial extent of the fan duct (56) is constant in a circumferential section (58) of the fan duct (56) which extends in the direction of rotation of the rotor (48) from the first outflow opening (61) to the second outflow opening (62).

10. The combine harvester (1) according to claim 9, **characterized in that** an outflow duct (79) is connected to the second outflow opening (62), the outflow duct being delimited by at least two vertically extending side walls (80) and a base element (81) and cover element (82) each disposed parallel to each other, wherein guide elements (83) with a trapezoidal cross section are disposed on at least the base element (81), the guide elements extending in the direction of the exit opening (84) of the outflow duct (79).

11. The combine harvester (1) according to claim 10, **characterized in that** the guide elements (83) have a height profile which increases in the direction of the exit opening (84).

12. The combine harvester (1) according to one of the preceding claims, **characterized in that** at least one air guide element (40) is respectively disposed below the lower sieve (35) and/or at least the second upper sieve segment (33), the air guide element having mutually opposing end faces (41, 42) which are free from sharply tapered regions and at least one side face (43) connecting them together.

13. The combine harvester (1) according to claim 12, **characterized in that** the respective air guide element (40) is at an inclination to the respective sieve plane of the lower sieve (35) and/or of at least the second upper sieve segment (33).

14. The combine harvester (1) according to claim 12 or claim 13, **characterized in that** the inclination of a virtual main axis (HA) of the respective air guide element (40) which connects the end faces (41, 42) at their points which are the farthest apart from each other can be adjusted by at least one actuator (44).

15. The combine harvester (1) according to one of claims 12 to 14, **characterized in that** the respective distance of the air guide elements (40) from the lower sieve (35) and/or the upper sieve (33) can be varied in the vertical direction.

16. The combine harvester (1) according to one of claims 12 to 15, **characterized in that** the respective distance of the air guide elements (40) from the lower sieve (35) and/or the upper sieve (33) can be varied in the horizontal direction.

17. The combine harvester (1) according to one of the preceding claims, **characterized in that** a steering axle (LA) with wheels (49) disposed thereon is disposed below a sieve pan (85) of the cleaning device (30), wherein sections of the sieve pan (85) extend between the wheels (49) over substantially the width of the combine harvester (1), **in that** the sieve pan (85) has a sieve assembly plane (86) located above the wheels (49) and a bottom region (87) located between the wheels (49), wherein the sieve assembly plane (86) and the bottom region (87) are disposed between two frame sections (88) which extend parallel to each other in the longitudinal direction (x) of the combine harvester (1) and extend in the vertical direction (z) of the combine harvester (1), wherein, in order to increase the steering angle, in a respective transitional region (90) from the sieve assembly plane (86) to the bottom plane (87), the frame sections (88) have a taper (91) directed in the transverse direction (y) of the combine harvester (1).

18. The combine harvester (1) according to claim 17, **characterized in that** the frame sections (88) are symmetrical in construction.

19. The combine harvester (1) according to claim 17 or claim 18, **characterized in that** the respective transitional region (90) of the frame sections (88) is smooth in construction.

## Revendications

1. Moissonneuse-batteuse (1) comprenant un dispositif de battage (3) et un dispositif de séparation (17) auxquels est associé respectivement un dispositif convoyeur (12, 21), les dispositifs convoyeurs (12, 21) étant agencés pour amener à un dispositif de nettoyage (30) un flux de récolte séparé par le dispositif de battage (3) et le dispositif de séparation (17) et devant être nettoyé, dans laquelle
- le dispositif de nettoyage (30) comprend un ventilateur de nettoyage (31) ainsi qu'un premier segment de grille supérieure (32) et un deuxième segment de grille supérieure (33) placé à la suite dans le sens du convoyage,
- une table de préparation intermédiaire (34) est disposée en dessous du premier segment de grille supérieure (32), et une grille inférieure (35) est disposée en dessous du deuxième segment de grille supérieure (33),
- le ventilateur de nettoyage (31) présente une zone de sortie d'air supérieure (36) et une zone de sortie d'air inférieure (37), sachant qu'un flux d'air (38) sortant de la zone de sortie d'air supérieure (36) est appliqué sur les faces supérieure et inférieure au moins du premier segment de grille supérieure (32), et un flux d'air (39) sortant de la zone de sortie d'air inférieure (37) est appliqué au moins sur la face inférieure du deuxième segment de grille supérieure (33) et sur les faces supérieure et inférieure de la grille inférieure (35),
**caractérisée en ce que**
pour un entraînement oscillant du premier segment de grille supérieure (32), du deuxième segment de grille supérieure (33), de la table de préparation intermédiaire (34) et de la grille inférieure (35), des actionneurs sont associés à ces dispositifs, lesquels actionneurs peuvent être activés indépendamment les uns des autres par un dispositif de commande (28).

2. Moissonneuse-batteuse (1) selon la revendication 1, **caractérisée en ce que** le premier segment de grille supérieure (32), le deuxième segment de grille supérieure (33) et la grille inférieure (35) présentent des angles de direction d'oscillation (SR1, SR2, SR3) différents.

3. Moissonneuse-batteuse (1) selon une des revendications 1 à 2, **caractérisée en ce que** le dispositif convoyeur (21) associé au dispositif de séparation (17) est réalisé sous forme de convoyeur à bande (45).

4. Moissonneuse-batteuse (1) selon une des revendications précédentes, **caractérisée en ce que** le ventilateur de nettoyage (31) comprend un rotor (48), pouvant être entraîné en rotation autour d'un axe (47), et un carter (50), ledit carter (50) présentant au moins une ouverture d'aspiration (72) et une première ouverture de sortie (61), et délimitant un canal de ventilateur (56) s'étendant autour du rotor (48), la dimension axiale du canal de ventilateur (56) augmentant en direction de la première ouverture de sortie (61), le long de la circonférence, dans le sens de rotation du rotor (48).

5. Moissonneuse-batteuse (1) selon la revendication 4, **caractérisée en ce qu'**un bord (67) de l'ouverture d'aspiration (72) définit un plan (71) perpendiculaire à l'axe (47) et divise le canal de ventilateur (56) en une zone centrale (75), délimitée radialement vers l'intérieur par le rotor (48), et une zone d'élargissement (76) dont la section augmente en direction de la première ouverture de sortie (61), le long de la circonférence, dans le sens de rotation du rotor (48).

6. Moissonneuse-batteuse (1) selon la revendication 4 ou 5, **caractérisée en ce qu'**une surface de déviation est prévue sur la première ouverture de sortie (61), en vue de la déviation du flux d'air (38) quittant la première ouverture de sortie (61), dans le sens opposé au sens de rotation du rotor (48).

7. Moissonneuse-batteuse (1) selon une des revendications 4 à 6, **caractérisée en ce que** plusieurs rotors (48) et carters (50) sont disposés le long de l'axe (47).

8. Moissonneuse-batteuse (1) selon la revendication 7, **caractérisée en ce que** lorsque plusieurs rotors (48) sont disposés le long de l'axe (47), un canal d'évacuation (71) qui s'étend sur la largeur de l'ensemble se raccorde aux premières ouvertures de sortie (61) et dévie le flux d'air (38) sortant, dans le sens opposé au sens de déplacement.

9. Moissonneuse-batteuse (1) selon une des revendications 4 à 8, **caractérisée en ce que** le carter (50) présente une deuxième ouverture de sortie (62) et **en ce que** la dimension axiale du canal de ventilateur (56) est constante dans une portion de circonférence (58) du canal de ventilateur (56) qui s'étend dans le sens de rotation du rotor (48), de la première ouverture de sortie (61) à la deuxième ouverture de sortie (62).

10. Moissonneuse-batteuse (1) selon la revendication 9, **caractérisée en ce qu'**un canal d'évacuation (79) se raccorde à la deuxième ouverture de sortie (62) et est délimité par au moins deux parois latérales (80), s'étendant verticalement, et respectivement par un élément de fond (81) et un élément de recouvrement (82) disposés parallèlement l'un à l'autre, des éléments de guidage (83) de section trapézoïdale étant disposés au moins sur l'élément de fond (81) et s'étendant en direction de l'ouverture de sortie (84) du canal d'évacuation (79).

11. Moissonneuse-batteuse (1) selon la revendication 10, **caractérisée en ce que** les éléments de guidage (83) présentent une forme en hauteur qui augmente en direction de l'ouverture de sortie (84).

12. Moissonneuse-batteuse (1) selon une des revendications précédentes, **caractérisée en ce qu'**il est prévu, en dessous de la grille inférieure (35) et/ou au moins du deuxième segment de grille supérieure (33), respectivement au moins un élément de guidage d'air (40) qui présente des faces frontales (41, 42), situées à l'opposé l'une de l'autre et exemptes de zones convergeant en pointes, et au moins une face latérale (43) les reliant entre elles.

13. Moissonneuse-batteuse (1) selon la revendication 12, **caractérisée en ce que** l'élément de guidage d'air (40) respectif présente une inclinaison par rapport au plan de grille respectif de la grille inférieure (35) et/ou au moins du deuxième segment de grille supérieure (33).

14. Moissonneuse-batteuse (1) selon la revendication 12 ou 13, **caractérisée en ce que** l'inclinaison d'un axe principal (HA) virtuel de l'élément de guidage d'air (40) respectif, qui relie les faces frontales (41, 42) en leurs points les plus éloignés les uns des autres, peut être réglée par au moins un actionneur (44).

15. Moissonneuse-batteuse (1) selon une des revendications 12 à 14, **caractérisée en ce que** la distance respective des éléments de guidage d'air (40) par rapport à la grille inférieure (35) et/ou la grille supérieure (33) peut être modifiée dans le sens vertical.

16. Moissonneuse-batteuse (1) selon une des revendications 12 à 15, **caractérisée en ce que** la distance respective des éléments de guidage d'air (40) par rapport à la grille inférieure (35) et/ou la grille supérieure (33) peut être modifiée dans le sens horizontal.

17. Moissonneuse-batteuse (1) selon une des revendications précédentes, **caractérisée en ce qu'**il est prévu, en dessous d'un caisson de grille (85) du dispositif de nettoyage (30), un essieu directeur (LA) sur lequel sont disposées des roues (49), le caisson de grille (85) s'étendant par portions entre les roues (49), sensiblement sur la largeur de la moissonneuse-batteuse (1), **en ce que** le caisson de grille (85) présente un plan de disposition de grille (86), situé au-dessus des roues (49), et une zone de fond (87) située entre les roues (49), le plan de disposition de grille (86) et la zone de fond (87) étant placés entre deux parties de châssis (88) mutuellement parallèles, s'étendant dans le sens longitudinal (x) de la moissonneuse (1), et orientées dans le sens vertical (z) de la moissonneuse (1), sachant que pour augmenter l'angle de braquage, les parties de châssis (88) présentent chacune, dans une zone de transition (90) du plan de disposition de grille (86) au plan de fond (87), un rétrécissement (91) orienté dans le sens transversal (y) de la moissonneuse (1).

18. Moissonneuse-batteuse (1) selon la revendication 17, **caractérisée en ce que** les parties de châssis (88) sont réalisées de manière symétrique.

19. Moissonneuse-batteuse (1) selon la revendication 17 ou 18, **caractérisée en ce que** la zone de transition (90) respective des parties de châssis (88) est réalisée sans gradins.
